# EUROPÄISCHE PATENTSCHRIFT

(11) **EP 2 815 626 B1**
(45) Veröffentlichungstag und Bekanntmachung des Hinweises auf die Patenterteilung: **29.06.2016**
(21) Anmeldenummer: 13705129.8
(22) Anmeldetag: 08.02.2013
(51) Int. Cl.: H05B 1/02, H05B 3/26, B60H 1/22, G01K 13/00

(54) **VERFAHREN ZUR HERSTELLUNG EINER FAHRZEUGHEIZUNG UND FAHRZEUGHEIZUNG**
METHOD FOR MANUFACTURING OF A VEHICLE HEATING AND VEHICLE HEATING
PROCÉDÉ DE FABRICATION D'UN CHAUFFAGE DE VÉHICULE ET CHAUFFAGE DE VÉHICULE

(30) Priorität: 16.02.2012 DE 102012202370
(43) Veröffentlichungstag der Anmeldung: 24.12.2014
(73) Patentinhaber: Webasto SE, 82131 Stockdorf (DE)
(72) Erfinder: BYTZEK, Dietmar, 76726 Germersheim (DE); KABELITZ, Thorsten, 81673 München (DE); GÖTTL, Karl, 83026 Rosenheim (DE); ECKERT, Daniel, 82131 Stockdorf (DE)
(74) Vertreter: Schumacher & Willsau
(86) Internationale Anmeldenummer: PCT/EP2013/052600
(87) Internationale Veröffentlichungsnummer: WO 2013/120786

(56) Entgegenhaltungen:
- WO-A1-2007/029981
- WO-A1-2011/047471
- GB-A- 2 477 337
- US-A- 4 149 066
- US-A1- 2009 272 731

## Beschreibung

Die Erfindung betrifft ein Verfahren zur Herstellung einer Fahrzeugheizung, bei dem ein Grundkörper der Fahrzeugheizung mit einer nicht-eigensicheren Heizleiterschicht und einer Sensoreinrichtung zur Detektion von Temperaturschwellenwertüberschreitungen ausgestattet wird.

Weiterhin betrifft die Erfindung eine Fahrzeugheizung, insbesondere eine mit dem hier beschriebenen Verfahren hergestellte Fahrzeugheizung, mit einem Grundkörper, der eine nicht-eigensichere Heizleiterschicht trägt, und mit einer der Heizleiterschicht zugeordneten Sensoreinrichtung, die dazu vorgesehen ist, eine Überschreitung eines Temperaturschwellenwertes zu detektieren.

Bei dem Grundkörper kann es sich in beiden Fällen beispielsweise um einen Wärmetauscher handeln, insbesondere um einen Metall/Luft- und/oder einen Metall/Flüssigkeit-Wärmetauscher.

Im Gegensatz zu eigensicheren Heizleiterschichten, beispielsweise PTC-Heizleiterschichten, die einen zu starken Temperaturanstieg durch eine Begrenzung des Stromflusses selbstständig verhindern können, sind hier mit nicht-eigensicheren Heizleiterschichten alle Arten von Heizleiterschichten gemeint, die genau diese Fähigkeit zur Vermeidung von unsicheren Zuständen im Fehlerfall nicht aufweisen.

Die nicht-eigensichere Heizleiterschicht kann, ohne darauf beschränkt zu sein, beispielsweise dazu vorgesehen sein, mit vergleichsweise hohen Spannungen beaufschlagt zu werden (beispielsweise 250 Volt), wobei zu hohe Spannungen beispielsweise durch eine Pulsweitenmodulation heruntergetaktet werden können, wenn dies vorteilhaft erscheint. Solche, im Vergleich zu konventionellen Bordnetzen mit 12 oder 24 Volt, relativ hohen Spannungen stehen beispielsweise bei Elektro- oder Hybridfahrzeugen häufig ohnehin zur Verfügung. Beispielsweise in solchen Umgebungen lassen sich durchaus elektrische Fahrzeugheizungen mit einer Leistung im Bereich von drei bis acht Kilowatt betreiben, wobei der Anwendungsbereich der Erfindung jedoch keinesfalls auf diesen Leistungsbereich oder diese Fahrzeugtypen beschränkt ist.

Die WO 2011/047471 A1 beschreibt ein Heizelement, das ein Substrat, einen Isolierfilm, einen widerstandsbehafteten Film zur Umwandlung von elektrischer Energie in Wärmeenergie und eine obere Schutzschicht umfasst. Das Heizelement kann auf eine äußere Oberfläche eines Metallrohres aufgeklebt sein, durch das ein Fluid fließt. Optional kann ein Temperatursensor auf einem zusätzlichen Film aufgebracht sein, der auf einer oberen Oberfläche des Heizelements aufgeklebt ist. Der Temperatursensor kann ein Thermistor, ein Thermokoppler oder ein kapazitiver Sensor sein.

Die US 2009/272731 beschreibt im Prinzip dieselbe Grundstruktur eines Heizelements, allerdings ohne Temperatursensor.

Die WO 2007/029981 A1 beschreibt ein keramisches Heizelement mit einer ersten Tafel, einem Heizkreis, einer Zwischenplatte und einem Schaltkreis zur Temperaturerfassung. Der Schaltkreis zur Temperaturerfassung wird mittels Siebdruck oder mittels Photolithographie und Ablagerung hergestellt.

Die US 4,149,066 A beschreibt einen Querschnitt durch eine flexible Heiztafel. Die flexible Heiztafel umfasst zur Wärmeabgabe eine Kohlenstoffschicht. Auf der Kohlenstoffschicht sind zunächst eine Isolierschicht, dann eine Gewebeschicht und dann eine Sensorschicht aufgebracht. Die Sensorschicht wird mittels Aufdrucken von leitfähiger Farbe oder einer Mischung aus Kunststoff mit einem feinen Silber-, Kupfer- oder Kohlenstoffpulver auf die Gewebeschicht aufgedruckt oder auflaminiert.

Die GB 2 477 337 A beschreibt eine Heizeinrichtung mit aufgetragenem Temperatursensor, wobei der eine Heizschicht der Heizvorrichtung tragende Grundkörper aus einem mechanisch hochbelastbarem Faserverbundwerkstoff besteht und der auf einer Trägerschicht aufgetragene Temperatursensor in einem Laminierungsverfahren mit weiteren Schichten verbacken wird.

Eine Fahrzeugheizung mit einer Heizleiterschicht in Form eines nicht-eigensicheren Heizelementes ist beispielsweise aus der Patentschrift EP 1 361 089 B1 bekannt. Gemäß dieser Druckschrift sind zur Temperaturüberwachung drei alternative Sensoren zur oberflächenspezifischen Erfassung einer das Heizelement repräsentierenden Wärmestrahlung vorgesehen, wobei das Heizelement als mäanderförmige Wellrippe ausgeführt ist. Einer dieser Sensoren ist als berührungslos arbeitender Infrarotsensor ausgebildet. Ein anderer, das Heizelement berührender Sensor ist in Form einer in das Heizelement integrierten elektrischen Widerstandsleitung vorgesehen. Der dritte dort vorgeschlagene Sensor ist ebenfalls im Bereich des Heizelementes angeordnet beziehungsweise in dieses integriert und arbeitet auf der Grundlage eines temperatursensitiven Lichtwellenleiters. Ein Nachteil der beiden im Bereich des Heizelementes angeordneten Sensoren besteht darin, dass sowohl das nachträgliche Integrieren der Widerstandsleitung als auch das nachträgliche Integrieren des Lichtwellenleiters arbeitsaufwendig und somit kostenintensiv sind, abgesehen davon, dass diese separaten Bauteile selbst vergleichsweise teuer sind.

Aus anderen Bereichen der Technik ist es alternativ zur Verwendung von separaten Bauteilen bekannt, zur Detektion von Temperaturschwellenwertüberschreitungen Sensorschichten auf Grundkörpern vorzusehen, wobei die Sensorschichten durch geeignete Einbrennprozesse direkt auf dem Grundkörper oder auf von diesem bereits getragenen Materialien ausgebildet werden. Dazu muss zumindest der Grundkörper und das einzubrennende Sensormaterial Temperaturen von typischerweise 900 °C oder mehr ausgesetzt werden, beispielsweise für einen Zeitraum zwischen 10 und 30 Minuten. Das für den Grundkörper verwendbare Material und/oder das vor dem Einbrennprozess gegebenenfalls schon auf den Grundkörper aufbringbare Material ist/sind dadurch Einschränkungen hinsichtlich der Temperaturverträglichkeit unterworfen.

Der Erfindung liegt die Aufgabe zugrunde, ausgehend von den gattungsgemäßen Verfahren zur Herstellung von Fahrzeugheizungen und von den gattungsgemäßen Fahrzeugheizungen, eine Lösung für kostengünstige Sensorschichten zur Detektion von Temperaturschwellenwertüberschreitungen anzugeben, bei der der Grundkörper hinsichtlich seiner Temperaturverträglichkeit nur so geringen Einschränkungen wie möglich unterworfen ist.

Diese Aufgabe wird durch die Merkmale der unabhängigen Ansprüche gelöst. Vorteilhafte Ausgestaltungen und Weiterbildungen der Erfindung ergeben sich aus den abhängigen Ansprüchen.

Vorgeschlagen wird zunächst ein Verfahren zur Herstellung einer Fahrzeugheizung, bei dem ein Grundkörper der Fahrzeugheizung mit einer nicht-eigensicheren Heizleiterschicht und einer Sensoreinrichtung zur Detektion von Temperaturschwellenwertüberschreitungen ausgestattet wird. Zur Ausbildung der Sensoreinrichtung wird dabei eine Sensorschicht aufgespritzt, wobei der Grundkörper nur Temperaturen von weniger als 800 °C ausgesetzt wird. Ein derartiges Aufspritzen von Sensorschichten lässt sich vergleichbar günstig wie Einbrennverfahren durchführen, es schränkt jedoch die Anforderungen an die Temperaturverträglichkeit des verwendeten Grundkörpers (beziehungsweise an die von dem Grundkörper bereits getragenen Materialien) deutlich weniger ein. Daher kommen durch den Einsatz eines Aufspritzverfahrens für den Grundkörper auch Materialien in Frage, die bei für Einbrennprozesse üblichen Temperaturen schmelzen oder in ihrer Materialeigenschaft hinsichtlich des vorgesehenen Einsatzzweckes irgendwie anders negativ verändert würden. Beispielsweise kann der Grundkörper durch die Verwendung eines geeigneten Aufspritzverfahrens ganz oder teilweise aus Aluminium bestehen. Selbstverständlich kommt für den Grundkörper auch eine Vielzahl anderer Materialien in Frage, wobei es sich in vielen Fällen um Materialien mit guten Wärmeleiteigenschaften handeln wird. Lediglich beispielhaft seien in diesem Zusammenhang Aluminiumlegierungen, Gläser und Keramiken genannt. Wenn die Sensorschicht, wie vorzugsweise vorgesehen, auf der von dem Grundkörper abgewandten Seite der Heizleiterschicht angeordnet wird, ergeben sich besondere Vorteile. Beispielsweise kann dadurch in vielen Fällen eine bessere Wärmeleitung zwischen der Heizleiterschicht und dem Grundkörper gewährleistet werden. Außerdem kann die Sensorschicht so auch die Temperatur der Heizleiterschicht genauer erfassen, als bei Ausführungsformen, bei denen die Sensorschicht zwischen dem als Wärmesenke wirkenden Grundkörper und der Heizleiterschicht angeordnet ist.

Zum Aufspritzen der Sensorschicht kommen insbesondere thermische Spritzverfahren in Frage, beispielsweise ein Plasmaspritzverfahren, ein Kaltgasspritzverfahren oder ein Flammspritzverfahren. In einigen Fällen kann es vorteilhaft sein, auch andere Bestandteile der Fahrzeugheizung, beispielsweise die Heizleiterschicht, durch ein thermisches Spritzverfahren auszubilden. Als besonders gut geeignete thermische Spritzverfahren werden derzeit Kaltgasplasmaspritzverfahren und Suspensionsflammspritzverfahren betrachtet. Beim Kaltgasspritzen wird ein Gas, beispielsweise Stickstoff, auf hohe Geschwindigkeiten beschleunigt, wobei mit dem Gas beförderte Partikel mit hoher Geschwindigkeit (beispielsweise mehrfacher Schallgeschwindigkeit) auf den Grundkörper oder ein von diesem getragenes Substrat auftreffen und durch die hohe kinetische Energie eine dichte, fest haftende Schicht bilden. Beim Suspensionsflammspritzen wird zunächst eine Suspension mit den aufzuspritzenden Partikeln hergestellt, um diese Suspension dann in eine Flamme einzudüsen. Dabei verdampft die Flüssigkeit zumindest teilweise, vorzugsweise aber ganz, und es treffen (idealerweise) nur die jeweiligen Partikel auf die Zieloberfläche auf, wodurch sich dichte Schichten herstellen lassen. Jedenfalls ist den in Frage kommenden Verfahren zum Aufspritzen der Sensorschicht gemeinsam, dass der Grundkörper dabei nicht den für Einbrennverfahren üblichen hohen Temperaturen ausgesetzt werden muss.

In diesem Zusammenhang kann beispielsweise vorgehsehen sein, dass der Grundkörper nur Temperaturen von weniger als 650 °C und sogar nur weniger als 500 °C ausgesetzt wird. Es ist nachvollziehbar, dass die für den Grundkörper (und/oder irgendwelche von diesem bereits getragenen Komponenten) verwendbare Anzahl von Materialien steigt, je niedriger die Temperaturen gehalten werden können. Dabei sollte klar sein, dass die Formulierung "Temperaturen ausgesetzt wird" nicht zwingend bedeuten soll, dass der gesamte Grundkörper diese Temperatur dadurch annehmen soll oder muss. Vielmehr kommt es ausschließlich darauf an, dass der Grundkörper auch nicht abschnittsweise Temperaturen ausgesetzt wird, durch die er Schaden nehmen könnte. Je nach Beschaffenheit des Grundkörpers (Größe, Wärmeleitfähigkeit, usw.) kann es daher beispielsweise in einigen Fällen durchaus möglich sein, dass der Grundkörper in den dem Aufspritzvorgang nicht direkt ausgesetzten Bereichen bereits Komponenten (beispielsweise elektrische oder andere Bauteile) trägt, die nur sehr viel niedrigeren Temperaturen als 500 °C widerstehen können, beispielsweise nur 100 °C oder noch weniger.

Die Sensorschicht kann eine Schichtdicke im Bereich von 10 µm bis 200 µm aufweisen. Es kommen aber auch Schichtdicken im Bereich von 10 µm bis 100 µm oder nur 10 µm bis 50 µm in Betracht. Unter den Begriff Sensorschicht sollen hier und im Übrigen nicht nur homogene Sensorschichten fallen, sondern durchaus auch mehrschichtige Sensorschichtaufbauten. Beispielsweise kann die Sensorschicht je nach Anwendungsfall, eine oder mehrere Isolationsschichten und/oder eine oder mehrere Kontaktschichten und/oder eine oder mehrere Schichten umfassen, deren Veränderung von elektrischen, optischen oder sonstigen Eigenschaften zur Erkennung von Überschreitungen von Temperaturschwellenwerten nutzbar sind. Weiterhin müssen der Aufbau und die Dicke der Sensorschicht nicht in allen Abschnitten gleich sein. Wird eine Sensorschicht beispielsweise auf in ihrer Längsrichtung auftretende Stromflüsse überwacht, so kann es ausreichen, bezogen auf die Längsrichtung nur die Endabschnitte mit Kontaktbereichen auszustatten. Soll aber beispielsweise eine flächige Sensorschicht auf Stromflüsse überwacht werden, die sich im Wesentlichen in Richtung ihrer Flächennormalen erstrecken, so wird es in der Regel sinnvoll sein, zwei beabstandete flächige Elektroden beziehungsweise Kontaktschichten vorzusehen, die sich im Wesentlichen senkrecht zu der oder den Flächennormalen erstrecken. Der Fachmann wird den Aufbau und die Dicke der Sensorschicht je nach Anwendungsfall beispielsweise so wählen, dass sich bei einer Temperaturschwellenwertüberschreitung ein ausreichend sicher detektierbarer elektrischer (oder optischer oder sonstiger) Effekt ergibt und dass der Materialverbrauch dennoch so niedrig wie möglich gehalten wird.

Es kann vorgesehen sein, dass die Sensorschicht mit Hilfe eines Pulvers hergestellt wird, wobei Pulverpartikel des Pulvers in agglomerierter Form vorliegen oder in agglomerierte Form gebracht werden und wobei die nicht-agglomerierten Pulverpartikel eine mittlere Korngröße d50 von weniger als 20 µm, vorzugsweise weniger als 10 µm aufweisen. Bezüglich der hier gemeinten, üblichen Definition der mittleren Korngröße d50 wird auf die einschlägige ISO 9276-2 verwiesen, sofern diesbezüglich Erläuterungsbedarf bestehen sollte. Beispielsweise Bariumtitanat-Pulver, das in einigen Fällen zur Schaffung der Sensorschicht in Frage kommen kann, hat typischerweise eine Kristallgröße von weniger als 10 µm (beispielsweise zwischen 2 µm und 8 µm oder zwischen 4 µm und 5 µm). Diese Partikelgröße kann für manche thermische Spritzverfahren (wie beispielsweise Plasmaspritzverfahren) zu klein sein, da sie zu Verstopfungen von Öffnungen des bei diesen Verfahren eingesetzten Spritzbrenners (oder irgendeines anderen Bestandteils der zum Aufspritzen verwendeten Vorrichtung) führen kann. Liegen jedoch mehrere Pulverpartikel in agglomerierter Form vor, zum Beispiel eingebettet in ein Hüllmaterial, kann ein Verstopfen der Öffnungen des Spritzbrenners vermieden werden. In den Agglomeraten können jeweils mehrere Pulverpartikel mit dem Hüllmaterial verbunden sein, das beispielsweise einen Kunststoff wie Polyvinylalkohol als Bestandteil haben kann. Weil die Agglomerate zumindest in der überwiegenden Mehrzahl größer als einzelne Pulverpartikel sind, kann ein Verstopfen des Spritzbrenners (oder irgendeines anderen Bestandteils der zum Aufspritzen verwendeten Vorrichtung) so zumindest in vielen Fällen vermieden werden. Selbstverständlich ist die Herstellung und Verwendung von Agglomeraten nicht auf Bariumtitanat-Pulver beschränkt. Vielmehr kann diese Technik für jedes im Rahmen der Erfindung in Frage kommende Pulver mit zu kleinen Pulverpartikeln verwendet werden. Damit die aufgespritzte Sensorschicht insgesamt die gewünschten elektrischen (oder optischen oder sonstigen) Eigenschaften aufweist, kann es sinnvoll sein, das zur Bildung der Agglomerate verwendete Hüllmaterial geeignet zu konditionieren. Soll beispielsweise insgesamt eine bestimmte spezifische elektrische Leitfähigkeit erzielt werden, sollte das Hüllmaterial vorzugsweise eine spezifische elektrische Leitfähigkeit haben, die in etwa mindestens so groß ist, wie die spezifische elektrische Leitfähigkeit der Pulverpartikel (bei einer Normalbetriebstemperatur der Fahrzeugheizung), sofern die Agglomerate beim Aufspritzen nicht zerstört werden oder das Hüllmaterial zumindest teilweise Bestandteil der aufgespritzten Sensorschicht bleibt. Man kann ein Zerstören der Agglomerate beziehungsweise ein zumindest teilweises Entfernen des Hüllmaterials aber auch gezielt unterstützen, so dass die Eigenschaften der Sensorschicht (zumindest weitgehend) durch die Eigenschaft der Pulverpartikel bestimmt werden. Hierzu können geeignete thermische, chemische und/oder physikalische Prozesse oder Nachbehandlungsschritte durchgeführt werden, sobald die Agglomerate die zur Verstopfung neigenden Abschnitte passiert haben. Falls mehrere Pulverkörner erst in die agglomerierte Form gebracht werden müssen, kann hierzu beispielsweise folgendermaßen vorgegangen werden: In einem ersten Schritt kann das entsprechende Material in seiner ursprünglichen Beschaffenheit bereitgestellt werden. In einem zweiten Schritt erfolgt dann eine Umwandlung in ein Vollmaterial, insbesondere mittels Sintern. Anschließend wird das Vollmaterial mittels Zerkleinern des Vollmaterials pulverisiert. Daraufhin können die Pulverpartikel durch die Anwendung eines Bindersystems sowie eine nachfolgende Trocknung und ein Ausbrennen des Binders agglomeriert werden. Es ist ebenfalls möglich, die Pulverpartikel mit Hilfe eines Granulierverfahrens zu pulverisieren. Soll beispielsweise ein granuliertes Perowskitpulver mit einer vorbestimmten mittleren Korngröße d50 zum Einsatz kommen, so kann wie folgt vorgegangen werden: In einer ersten Verfahrensstufe erfolgt ein Einwiegen und Mischen, ein Lösen der Salze in Säure, ein Ausfällen mit Lauge, ein Filtrieren sowie ein Waschen und Trocknen. In einer zweiten Verfahrensstufe kann anschließend eine Wärmebehandlung zur Phasenreaktion und/oder Umwandlung durchgeführt werden. In einer dritten Verfahrensstufe kann dann ein Nassmahlen bis zur gewünschten Feinheit erfolgen, wobei in einer vierten Verfahrensstufe ein Fraktionieren durch Sichten oder Sieben, eine Kontrolle des fertigen Pulvermaterials und/oder eine Aufbereitung von Restmengen erfolgen kann.

Bei bestimmten Ausführungsformen des hier beschriebenen Verfahrens kann vorgesehen sein, dass die Sensorschicht mit Hilfe eines Pulvers hergestellt wird, das zu einer Widerstands- beziehungsweise Impedanzcharakteristik mit einem positiven Temperaturkoeffizienten führt. Diese Herangehensweise ist insbesondere dann sinnvoll, wenn die Sensorschicht eine längliche Ausdehnung mit zwei Endabschnitten hat, zwischen denen ein Messsignal abgegriffen wird, um die Sensorschicht hinsichtlich in ihrer Längsrichtung auftretender (oder erzwungener) Ströme zu überwachen. Die Funktionsweise kann dann ähnlich wie bei der Verwendung eines PTC-Widerstandsleiters sein, weil aufgrund des Reihenschaltungscharakters einer solchen länglichen Ausdehnung bereits eine ausreichende Erwärmung eines vergleichsweise kurzen Längenabschnitts ausreicht, um den Gesamtwiderstand (beziehungsweise die Gesamtimpedanz) so weit zu erhöhen, dass eine lokale Temperaturschwellenwertüberschreitung sicher detektiert werden kann. Entlang größerer Längenabschnitte oder sogar über die gesamte Länge auftretende Temperaturschwellenwertüberschreitungen lassen sich so natürlich erst recht sicher feststellen. Ein Beispiel zur Erzielung einer Widerstandscharakteristik mit einem positiven Temperaturkoeffizienten ist die Verwendung des vorstehend schon erwähnten Bariumtitanat-Pulvers, wobei das relativ kostengünstige Bariumtitanat vorzugsweise mit Blei dotiert ist oder wird.

Weiterhin kommen Ausführungsformen in Betracht, bei denen vorgesehen ist, dass die Sensorschicht mit Hilfe eines Pulvers hergestellt wird, das zu einer Widerstands- beziehungsweise Impedanzcharakteristik mit einem negativen Temperaturkoeffizienten führt. Das Vorsehen eines negativen Temperaturkoeffizienten kommt insbesondere dann in Betracht, wenn es sich bei der Sensorschicht im weitesten Sinne um eine zumindest abschnittsweise flächige Schicht handelt, die hinsichtlich Stromflüssen in Richtung ihrer (ggf. jeweiligen) Flächennormalen überwacht werden soll. Als flächige Sensorschicht soll hierbei beispielsweise auch eine aus einem oder mehreren (ggf. sehr schmalen) Streifen bestehende Sensorschicht verstanden werden, beispielsweise auch eine aus Streifen bestehende Schicht, bei der der Streifen eine Zylinderoberfläche mehrfach und auf verschiedenen Höhen umschlingt, so dass sich eine Vielzahl von (differentiellen) Flächennormalen ergibt. In der Regel wird die Ober- und die Unterseite der Schicht mit negativem Temperaturkoeffizienten jeweils mit einer ebenfalls flächigen Elektrode zum Abgreifen eines Messsignals ausgestattet sein. Eine solche Sensorschicht kann als Parallelschaltung einer Vielzahl von Widerständen oder Impedanzen (Kapazitäten) betrachtet werden, so dass bereits eine lokale Temperaturschwellenwertüberschreitung zu einem sicher detektierbaren Sinken des Gesamtwiderstandes (beziehungsweise der Gesamtimpedanz) führt. Temperaturschwellenwertüberschreitungen, die größere Flächenabschnitte oder sogar die gesamte Fläche betreffen, lassen sich so natürlich ebenfalls sicher feststellen. Ebenso kann beispielsweise auch ein lokaler Durchschlag oder eine lokale Lichtbogenbildung zwischen den Elektroden festgestellt oder im Idealfall vorhergesehen und damit vermieden werden. Beispielsweise in Fällen, in denen es ausschließlich um die Detektion von Durchschlägen geht, kommen auch Ausführungsformen in Betracht, bei denen die Sensorschicht durch eine flächige Isolatorschicht mit auf der Ober- und der Unterseite davon vorgesehenen Kontaktschichten gebildet ist. Insofern ist der Begriff negativer Temperaturkoeffizient hier im weitesten Sinne zu verstehen. Um eine Sensorschicht mit negativem Temperaturkoeffizient im klassischeren Sinne auszubilden, können beispielsweise Materialien wir Siliziumdioxid, Siliziumcarbid, Aluminiumoxid, Titanoxid und andere Keramiken verwendet werden. Beispielsweise im Falle einer Glaskeramik kann vorgesehen sein, dass diese ein oder mehrere Alkalimetalle enthält, beispielsweise in einem Anteil bis zu zehn Gewichtsprozent. Es kann auch vorgesehen sein, dass die Glaskeramik mit Zirkonoxid, Zirkonsilikat, Quarz, Titanoxid und/oder Zinkoxid dotiert ist oder wird. Der Anteil der Dotierung kann dabei beispielsweise bis zu drei Gewichtsprozent betragen.

Jede Fahrzeugheizung, die mit Hilfe einer Variante des vorstehend beschriebenen Verfahrens hergestellt wurde, fällt in den Schutzbereich der zugehörigen Ansprüche. Vorgeschlagen wird außerdem eine Fahrzeugheizung, insbesondere eine Fahrzeugheizung, die mit Hilfe des vorstehend beschriebenen Verfahrens hergestellt wurde. Die Fahrzeugheizung weist einen Grundkörper, der eine nicht-eigensichere Heizleiterschicht trägt, und eine der Heizleiterschicht zugeordneten Sensoreinrichtung auf, die dazu vorgesehen ist, eine Überschreitung eines Temperaturschwellenwertes zu detektieren. Die Sensoreinrichtung umfasst dabei eine aufgespritzte Sensorschicht, die so hergestellt wurde, dass der Grundkörper nur Temperaturen von weniger als 800 °C, bevorzugter weniger als 650 °C und am bevorzugtesten weniger als 500 °C ausgesetzt wurde. Solche Fahrzeugheizungen lassen sich beispielsweise daran erkennen, dass der die Sensorschicht tragende Grundkörper aus einem Material besteht, das bei für Einbrennprozesse üblichen Temperaturen geschmolzen oder anders nachteilig verändert worden wäre. Beispielsweise hält Aluminium den für Einbrennprozesse üblicherweise erforderlichen 900 °C oder mehr nicht stand, ohne (zumindest teilweise) zu schmelzen. Weiterhin finden sich bei durch thermische Spritzverfahren hergestellten Schichten in der Regel keine verglasten Bereiche, die bei durch Einbrennverfahren hergestellten Schichten häufig anzutreffen sind.

Der Grundkörper kann auch im Falle der Fahrzeugheizung ein Wärmetauscher oder ein Wärmetauscherbestandteil sein, beispielsweise ein Metall/Luft- und/oder ein Metall/Flüssigkeits-Wärmetauscher.

Im Übrigen ergeben sich für die hier in Rede stehende Fahrzeugheizung die vorstehend im Zusammenhang mit dem Herstellungsverfahren erläuterten Vorteile und Eigenschaften in analoger oder ähnlicher Weise, weshalb an dieser Stelle zur Vermeidung von Wiederholungen auf die entsprechenden Ausführungen verwiesen wird. Es wird ausdrücklich darauf hingewiesen, dass sämtliche im Zusammenhang mit dem Herstellungsverfahren erläuterten Merkmale einzeln oder in beliebiger Kombination und in analoger Weise auch dann für die Fahrzeugheizung wesentlich sein können, wenn diese Merkmale im Rahmen der Fahrzeugheizung bisher nicht beansprucht wurden.

Aus dem Vorstehenden ergibt sich, dass ein Grundgedanke der Erfindung darin besteht, elektrische Fahrzeugheizungen, insbesondere elektrische Fahrzeugheizungen mit vergleichsweise hohen Betriebsspannungen von beispielsweise einigen hundert Volt Gleichspannung, dadurch kostengünstig und ohne die Verwendung von Einbrennverfahren herzustellen, dass zumindest die der Heizleiterschicht zugeordnete Sensorschicht zur Detektion von Temperaturschwellenwertüberschreitungen, vorzugsweise aber alle Schichten des schichtförmigen Aufbaus, durch den Einsatz von thermischen Spritzverfahren auf den Grundkörper aufgebracht werden. Dadurch wird der Grundkörper deutlich weniger hohen Temperaturen ausgesetzt als bei üblicherweise verwendeten Einbrennverfahren, so dass für den Grundkörper beispielsweise auch Materialen mit einem vergleichsweise niedrigen Schmelzpunkt in Frage kommen. In Fällen, in denen das zur Erzeugung der jeweiligen Schicht verwendete Ausgangspulver, beispielsweise Bariumtitanat-Pulver, eine so kleine mittlere Korngröße d50 aufweist, dass Verstopfungen der zum thermischen Aufspritzen verwendeten Vorrichtungen zu befürchten sind, ist vorgesehen, mehrere Pulverkörner vor dem thermischen Aufspritzen zu agglomerieren, um so die Gefahr von Verstopfungen zu verringern. Zu diesem Zweck können die zu agglomerierenden Pulverkörner von einem Hüllmaterial umschlossen werden. Das Hüllmaterial kann nach dem Verlassen der zu Verstopfungen neigenden Abschnitte entweder wieder entfernt werden (zumindest so weit wie möglich), oder es verbleibt gezielt als Bestandteil der erzeugten Schicht, wobei die Materialeigenschaften des Hüllmaterials dann passend zu den Eigenschaften der zu erzeugenden Schicht zu wählen sind. Für die zur Detektion von Temperaturschwellenwertüberschreitungen vorgesehenen Sensorschichten kommen sowohl Materialien mit positivem wie auch Materialien mit negativem Temperaturkoeffizienten in Betracht. Insgesamt kann somit beispielsweise eine Fahrzeugheizung mit einem Aluminiumwärmetauscher hergestellt werden, der eine nicht-eigensichere Heizleiterschicht trägt, die von einer Sensoreinrichtung auf Temperaturschwellenwertüberschreitungen überwacht wird.

Die Erfindung wird nun unter Bezugnahme auf die beigefügten Zeichnungen anhand besonders bevorzugter Ausführungsformen beispielhaft erläutert.

Es zeigen:
- Figur 1: eine schematische, teilweise perspektivische Darstellung einer ersten Ausführungsform einer Fahrzeugheizung, die gleichzeitig Verfahrensschritte zur Herstellung dieser Fahrzeugheizung veranschaulicht;
- Figur 2: eine schematische, teilweise perspektivische Darstellung einer zweiten Ausführungsform einer Fahrzeugheizung, die gleichzeitig Verfahrensschritte zur Herstellung dieser Fahrzeugheizung veranschaulicht;
- Figur 3: eine schematische, teilweise geschnittene Darstellung einer dritten Ausführungsform einer Fahrzeugheizung, die gleichzeitig Verfahrensschritte zur Herstellung dieser Fahrzeugheizung veranschaulicht; und
- Figur 4: eine schematische, teilweise geschnittene Darstellung einer vierten Ausführungsform einer Fahrzeugheizung, die gleichzeitig Verfahrensschritte zur Herstellung dieser Fahrzeugheizung veranschaulicht.

In den Figuren bezeichnen gleiche Bezugszeichen gleiche oder ähnliche Komponenten, die zur Vermeidung von Wiederholungen zumindest teilweise nicht mehrfach erläutert werden.

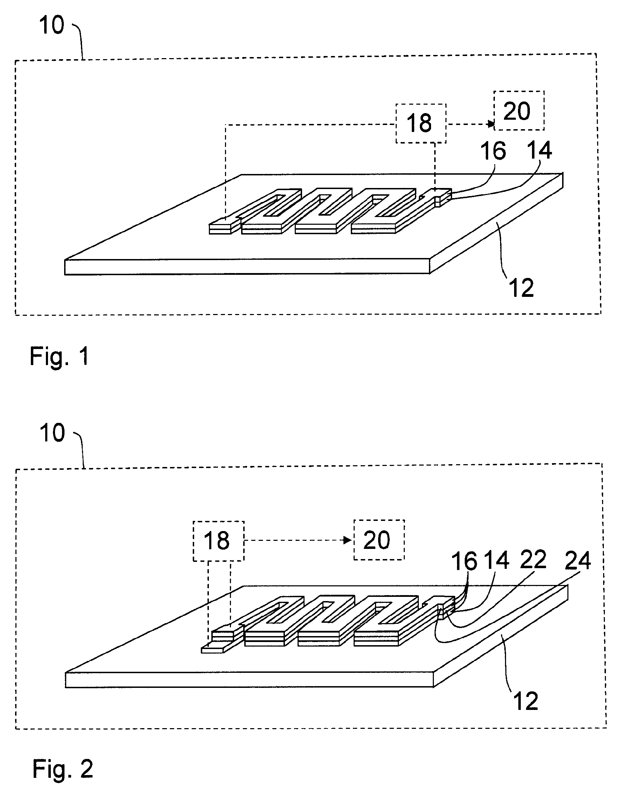

Figur 1 zeigt eine schematische, teilweise perspektivische Darstellung einer ersten Ausführungsform einer Fahrzeugheizung 10, und sie veranschaulicht gleichzeitig Verfahrensschritte zur Herstellung dieser Fahrzeugheizung 10.

Bei der in Figur 1 dargestellten Fahrzeugheizung 10 sowie auch bei allen anderen im Folgenden beschriebenen Fahrzeugheizungen kann es sich sowohl um Luftheizungen als auch um sogenannte Wasserheizungen handeln, beispielsweise - und ohne darauf beschränkt zu sein - für Elektro- oder Hybridautos. Luftheizungen unterscheiden sich von den sogenannten Wasserheizungen dadurch, dass bei Luftheizungen der zu erwärmende Luftstrom direkt über einen Wärmetauscher des Luftheizgerätes geführt wird, während bei den sogenannten Wasserheizungen zunächst eine Flüssigkeit, in der Regel ein Gemisch aus Wasser - daher der Name - und einem Frostschutzmittel, beispielsweise Glykol, über einen Wärmetauscher des Wasserheizgerätes geführt wird, um die Wärme mit Hilfe der Flüssigkeit und eines weiteren Wärmetauschers an den gewünschten Ort zu bringen.

Die in Figur 1 insgesamt nur als Block schematisch dargestellte Fahrzeugheizung 10 weist einen Grundkörper 12 auf, bei dem es sich in diesem Fall um einen Wärmetauscher handelt. Je nach Art der Fahrzeugheizung ist dieser Wärmetauscher 12 dazu vorgesehen, Luft oder eine Flüssigkeit zu erwärmen, wozu der Wärmetauscher 12 an seiner Unterseite nicht dargestellte Rippen oder ähnliche Einrichtungen zur Vergrößerung der für den Wärmetausch wirksamen Oberfläche aufweisen kann. Bei der Herstellung der in Figur 1 dargestellten Fahrzeugheizung 10 wurde die Oberfläche des Wärmetauschers 12 mit einer nicht-eigensicheren Heizleiterschicht 14 ausgestattet, und zwar mit Hilfe eines thermischen Spritzverfahrens. Das direkte Aufbringen der Heizleiterschicht 14 auf den Wärmetauscher 12, also der Verzicht auf eine dazwischenliegende Isolierschicht, ist in der Regel nur dann sinnvoll, wenn der Wärmetauscher 12 aus einem Material hergestellt ist, das eine deutlich geringere elektrische Leitfähigkeit als die Heizleiterschicht 14 aufweist. Im Betrieb ist die Heizleiterschicht 14 mit einer nicht dargestellten Spannungsquelle verbunden, bei der es sich beispielsweise um eine gegebenenfalls durch Pulsweitenmodulation auf 250 Volt heruntergetaktete Gleichspannungsquelle handeln kann. Zu diesem Zweck ist die Heizleiterschicht 14 an ihren Endabschnitten (bezogen auf ihre längliche Ausdehnungsrichtung) geeignet zu kontaktieren, was im Ermessen des Fachmanns liegt und ebenfalls nicht dargestellt ist.

Auf die Heizleiterschicht 14 wurde mit Hilfe eines thermischen Spritzverfahrens eine Sensorschicht 16 aufgespritzt, die im Falle der Ausführungsform von Figur 1 einen positiven Temperaturkoeffizienten aufweist, so dass sich für die Sensorschicht 16 zumindest tendenziell eine PTC-Charakteristik ergibt.

In der Praxis wird die Verwendung eines thermischen Spritzverfahrens möglicherweise dazu führen, dass sich anstelle des schematisch dargestellten exakt sandwichartigen Schichtaufbaus eine Konfiguration ergibt, bei der sich das Material der Sensorschicht 16 zumindest abschnittsweise auch über die Randbereiche der Heizleiterschicht 14 erstreckt oder bei der die Heizleiterschicht 14 sogar mehr oder weniger vollständig unter der Sensorschicht 16 begraben ist.

Wenn die Sensorschicht 16 ohne Verwendung einer Isolierschicht direkt auf der Heizleiterschicht 14 angeordnet ist, wie dies in Figur 1 dargestellt ist, muss die elektrische Leitfähigkeit der Sensorschicht 16 für normale Betriebstemperaturen (deutlich) geringer gewählt werden als die elektrische Leitfähigkeit der Heizleiterschicht 14, um einen ordnungsgemäßen Betrieb der Fahrzeugheizung 10 zu gewährleisten.

Die Sensorschicht 16 mit positivem Temperaturkoeffizienten ist Bestandteil einer Sensoreinrichtung, die neben der Sensorschicht 16 auch eine Messeinrichtung 18 und einen Controller 20 umfasst, der nicht ausschließlich der Sensoreinrichtung zugeordnet sein muss. Beispielsweise ist es denkbar, dass der Controller 20 den Betrieb der gesamten Fahrzeugheizung steuert beziehungsweise regelt, oder dass die für die Sensoreinrichtung wesentlichen Funktionen von einem Controller 20 wahrgenommen werden, der ohnehin im Fahrzeug vorhanden ist. Im Betrieb der Fahrzeugheizung 10 überwacht die Messeinrichtung 18 den temperaturabhängigen Widerstand der Sensorschicht 16, beispielsweise indem sie - wie durch die gestrichelten Linien angedeutet - an die Endabschnitte der Sensorschicht 16 eine vorzugsweise konstante Spannung anlegt und den sich ergebenden Stromfluss erfasst, beispielsweise über einen Shuntwiderstand, der Bestandteil der Messeinrichtung 18 sein kann. Tritt nun im Bereich der Heizleiterschicht 14 aufgrund irgendeines Fehlers eine zu starke Erwärmung auf, beispielsweise eine Temperatur von mehr als 150 °C, so führt dies bei geeigneter Konditionierung der Sensorschicht 16 dazu, dass sich ihr Gesamtwiderstand aufgrund ihres bei positiven Temperaturkoeffizienten dominierenden Reihenschaltungscharakters so erhöht, dass dies von der Messeinrichtung 18 sicher erkannt werden kann. Die Messeinrichtung 18 kann dem Controller 20 dann ein geeignetes Signal zur Verfügung stellen, damit dieser als Gegenmaßnahme beispielsweise den Stromfluss durch die Heizleiterschicht 14 verringert oder ganz verhindert.

Figur 2 zeigt eine schematische, teilweise perspektivische Darstellung einer zweiten Ausführungsform einer Fahrzeugheizung 10, und sie veranschaulicht gleichzeitig Verfahrensschritte zur Herstellung dieser Fahrzeugheizung 10.

Auch bei dieser Ausführungsform ist die Heizleiterschicht 14 direkt auf den durch einen Wärmetaucher 12 gebildeten Grundkörper der Fahrzeugheizung 10 aufgespritzt. Die Fahrzeugheizung gemäß Figur 2 unterscheidet sich dadurch von der Fahrzeugheizung gemäß Figur 1, dass die Sensorschicht 16 bei dieser Ausführungsform drei Bestandteile umfasst, nämlich die Heizleiterschicht 14, die in diesem Fall neben ihrer eigentlichen Funktion als Heizleiter gleichzeitig einen Bestandteil der Sensorschicht 16 bildet, eine durch thermisches Spritzen auf die Heizleiterschicht 14 aufgespritzte Schicht 22 mit einem negativen Temperaturkoeffizienten und eine auf die Schicht 22 aufgebrachte elektrisch leitende Kontaktschicht 24. Die Funktionsweise dieses Aufbaus ist wie folgt: Tritt im Bereich der Heizleiterschicht 14 aufgrund irgendeines Fehlers eine zu starke Erwärmung auf, beispielsweise eine Temperatur von mehr als 150 °C, so führt dies bei geeigneter Konditionierung der Schicht 22 mit negativem Temperaturkoeffizienten dazu, dass sich ihr Gesamtwiderstand oder ihre Gesamtimpedanz aufgrund ihres bei negativen Temperaturkoeffizienten dominierenden Parallelschaltungscharakters so verringert, dass dies von der Messeinrichtung 18 sicher erkannt werden kann. Zu diesem Zweck ist die Messeinrichtung 18 in diesem Fall, wie durch die gestrichelten Linien angedeutet, zwischen die zusätzlich als untere Kontaktschicht dienende Heizleiterschicht 14 und die über der Schicht 22 mit negativem Temperaturkoeffizienten vorgesehene Kontaktschicht 24 geschaltet. Die Messeinrichtung 18 kann so, in ähnlicher Weise wie dies im Zusammenhang mit der Ausführungsform gemäß Figur 1 erläutert wurde, eine lokale oder eine allgemeine Temperaturschwellenwertüberschreitung anhand eines deutlichen Abfalls des Widerstandes oder der Impedanz der Schicht 22 mit negativem Temperaturkoeffizienten sicher detektieren und dem Controller 20 ein entsprechendes Signal liefern.

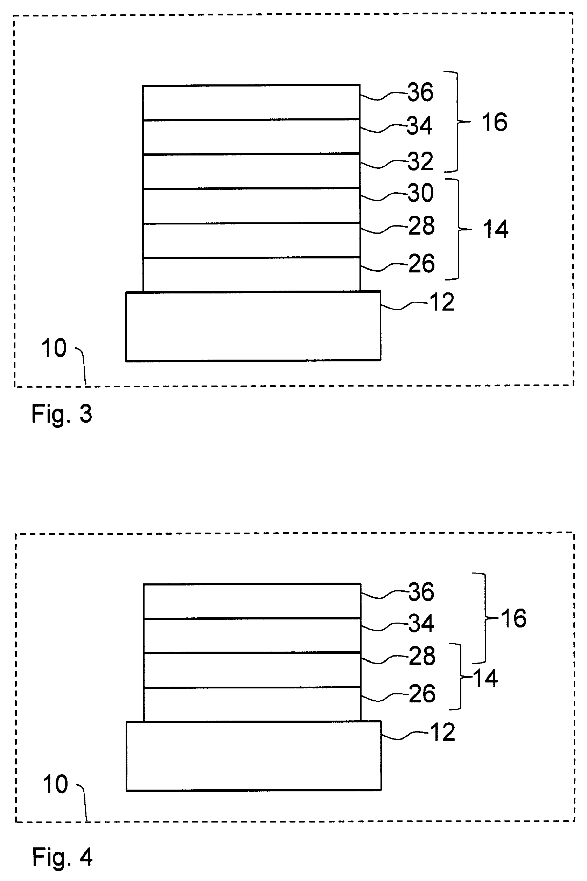

Figur 3 zeigt eine schematische, teilweise geschnittene Darstellung einer dritten Ausführungsform einer Fahrzeugheizung 10, und sie veranschaulicht gleichzeitig Verfahrensschritte zur Herstellung dieser Fahrzeugheizung 10.

Auch bei der in Figur 3 schematisch dargestellten Fahrzeugheizung 10 ist der Grundkörper 12 durch einen Wärmetauscher gebildet. In diesem Fall besteht der Wärmetauscher 12 jedoch aus einem elektrisch leitfähigen Material, insbesondere aus Aluminium. Daher unterteilt sich die Heizleiterschicht 14 bei dieser Ausführungsform in eine erste Isolationsschicht 26, die eigentliche Heizschicht 28 und eine zweite Isolationsschicht 30. Vorzugsweise werden alle drei Bestandteile der Heizleiterschicht durch ein thermisches Spritzverfahren aufgespritzt. Bezogen auf die Darstellung oberhalb von der insgesamt mit 14 bezeichneten Heizleiterschicht, ist eine insgesamt mit 16 bezeichnete Sensorschicht vorgesehen, die ebenfalls durch ein thermisches Spritzverfahren aufgespritzt wurde und die bei dieser Ausführungsform ihrerseits drei Bestandteile aufweist. Direkt über der zweiten Isolationsschicht 30 befindet sich eine erste elektrisch leitfähige Kontaktschicht 32, auf die eine Schicht 34 aus einem Material mit negativem Temperaturkoeffizienten aufgespritzt wurde. Die Schicht 34 kann - ohne darauf beschränkt zu sein - insbesondere aus einem der Materialen bestehen, die im allgemeinen Teil der Beschreibung für Schichten mit negativem Temperaturkoeffizienten vorgeschlagen wurden. Direkt auf die Schicht 34 mit negativem Temperaturkoeffizienten wurde eine zweite elektrisch leitfähige Kontaktschicht 36 aufgespritzt. Die Schicht 34 mit negativem Temperaturkoeffizienten ist so konditioniert, dass bereits eine lokale Überschreitung eines vorgegebenen Temperaturschwellenwertes in irgendeinem Bereich der Heizleiterschicht 14 dazu führt, dass der zwischen der ersten Kontaktschicht 32 und der zweiten Kontaktschicht 34 wirksame Gesamtwiderstand oder die dort wirksame Gesamtimpedanz der Schicht 34 mit negativem Temperaturkoeffizienten aufgrund des Parallelschaltungscharakters des Aufbaus deutlich abnimmt. Dies kann von einer analog zur Figur 2 zwischen die Kontaktschichten 32 und 36 geschalteten, aber in Figur 3 nicht dargestellten Messeinrichtung sicher detektiert werden, so dass geeignete Gegenmaßnahmen ergriffen werden können.

Figur 4 zeigt eine schematische, teilweise geschnittene Darstellung einer vierten Ausführungsform einer Fahrzeugheizung 10, und sie veranschaulicht gleichzeitig Verfahrensschritte zur Herstellung dieser Fahrzeugheizung 10.

Die in Figur 4 dargestellte Fahrzeugheizung 10 unterscheidet sich von der Fahrzeugheizung gemäß Figur 3 dadurch, dass dort auf die zweite Isolationsschicht 30 und die erste Kontaktschicht 32 verzichtet wurde. Bei der in Figur 4 dargestellten Ausführungsform umfasst die Heizleiterschicht 14 daher nur die untere, erste Isolationsschicht 26 und die eigentliche Heizschicht 28. Dabei übernimmt die eigentliche Heizschicht 28 eine Doppelfunktion, weil sie neben der Heizfunktion auch als untere Kontaktschicht der insgesamt mit 16 bezeichneten Sensorschicht dient. Zur Sensorschicht 16 zählen daher in diesem Fall die eigentliche Heizschicht 28, die Schicht 34 mit negativem Temperaturkoeffizienten und die obere Kontaktschicht 36. Die auch in Figur 4 nicht dargestellte Messeinrichtung ist daher zwischen die eigentliche Heizschicht 28 und die obere Kontaktschicht 36 zu schalten, um die anhand von Figur 3 erläuterte Funktionalität zu erhalten.

Obwohl dies in den Figuren nicht dargestellt ist, sollte klar sein, dass es auch im Falle der Verwendung von Sensorschichten mit positivem Temperaturkoeffizienten vorteilhaft sein kann, eine Isolationsschicht zwischen dem Grundkörper 12 und der Heizleiterschicht 16 und/oder zwischen der Heizleiterschicht 14 beziehungsweise deren eigentlicher Heizschicht und der Sensorschicht 16 vorzusehen. Außerdem kann in allen Fällen eine nicht dargestellte oberste Abdeckschicht vorgesehen werden, insbesondere eine isolierende oberste Abdeckschicht, die vorzugsweise eine Schutzfunktion übernehmen kann.

Bei den vorstehend erwähnten Isolationsschichten 26 und 30 kann es sich beispielsweise um Aluminiumoxidschichten handeln, während die Heizleiterschicht 14 beziehungsweise die eigentliche Heizschicht 28 beispielsweise durch eine Nickelchromschicht verwirklicht werden kann. Als Kontaktschichten 32, 36 können beispielsweise Kupferschichten dienen und als Schicht 34 mit negativem Temperaturkoeffizienten kommt neben den im allgemeinen Teil der Beschreibung bereits genannten Materialien beispielsweise auch eine Schicht aus mit Chromoxid dotiertem Titanoxid in Betracht.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Fahrzeugheizung
- 12: Grundkörper/Wärmetauscher
- 14: Heizleiterschicht
- 16: Sensorschicht
- 18: Messeinrichtung
- 20: Controller
- 22: Schicht mit negativem Temperaturkoeffizienten
- 24: Kontaktschicht
- 26: Erste Isolationsschicht
- 28: Eigentliche Heizschicht
- 30: Zweite Isolationsschicht
- 32: Erste Kontaktschicht
- 34: Material mit negativem Temperaturkoeffizienten
- 36: Zweite Kontaktschicht

## Patentansprüche

1. Verfahren zur Herstellung einer Fahrzeugheizung (10), bei dem ein Grundkörper (12) der Fahrzeugheizung (10) mit einer nicht-eigensicheren Heizleiterschicht (14) und einer Sensoreinrichtung (16, 18, 20) zur Detektion von Temperaturschwellenwertüberschreitungen ausgestattet wird, wobei zur Ausbildung der Sensoreinrichtung (16, 18, 20) eine Sensorschicht (16) aufgespritzt wird, **dadurch gekennzeichnet, dass** der Grundkörper (12) bei der Herstellung der Sensorschicht (16) nur Temperaturen von weniger als 800 °C ausgesetzt wird, und dass der Grundkörper (12) ein Metall/Luft- oder Metall/Flüssigkeits-Wärmetauscher ist.

2. Verfahren nach Anspruch 1, **dadurch gekennzeichnet, dass** die Sensorschicht (16) und/oder die Heizleiterschicht (14) mit Hilfe eines thermischen Spritzverfahrens ausgebildet werden/wird.

3. Verfahren nach Anspruch 1 oder 2, **dadurch gekennzeichnet, dass** der Grundkörper (12) nur Temperaturen von weniger als 650 °C und am bevorzugtesten weniger als 500 °C ausgesetzt wird.

4. Verfahren nach einem der vorhergehenden Ansprüche, **dadurch gekennzeichnet, dass** die Sensorschicht (16) eine Schichtdicke im Bereich von 10 µm bis 200 µm, bevorzugter 10 µm bis 100 µm und am bevorzugtesten 10 µm bis 50 µm aufweist.

5. Verfahren nach einem der vorhergehenden Ansprüche, **dadurch gekennzeichnet, dass** die Sensorschicht (16) mit Hilfe eines Pulvers hergestellt wird, wobei Pulverpartikel des Pulvers in agglomerierter Form vorliegen oder in agglomerierte Form gebracht werden und wobei die nicht-agglomerierten Pulverpartikel eine mittlere Korngröße d50 von weniger als 20 µm, vorzugsweise weniger als 10 µm aufweisen.

6. Verfahren nach einem der vorhergehenden Ansprüche, **dadurch gekennzeichnet, dass** die mit Hilfe eines Pulvers hergestellte Sensorschicht (16) eine Widerstands- beziehungsweise Impedanzcharakteristik mit einem positiven Temperaturkoeffizienten aufweist.

7. Verfahren nach einem der vorhergehenden Ansprüche, **dadurch gekennzeichnet, dass** die mit Hilfe eines Pulvers hergestellte Sensorschicht (16) eine Widerstands- beziehungsweise Impedanzcharakteristik mit einem negativen Temperaturkoeffizienten aufweist.

8. Verfahren nach einem der vorhergehenden Ansprüche, **dadurch gekennzeichnet, dass** die Sensorschicht (16) auf der Heizleiterschicht (14) angeordnet ist.

9. Verfahren nach einem der Ansprüche 1 bis 8, **dadurch gekennzeichnet, dass** die Sensorschicht (16) auf der von dem Grundkörper (12) abgewandten Seite der Heizleiterschicht (14) angeordnet ist.

10. Verfahren nach einem der vorhergehenden Ansprüche, **dadurch gekennzeichnet, dass** der Grundkörper (12) ganz oder teilweise aus Aluminium besteht.

11. Fahrzeugheizung (10) mit einem Grundkörper (12), der eine nicht-eigensichere Heizleiterschicht (14) trägt, und mit einer der Heizleiterschicht (14) zugeordneten Sensoreinrichtung (16, 18, 20), die dazu vorgesehen ist, eine Überschreitung eines Temperaturschwellenwertes zu detektieren, wobei die Sensoreinrichtung (16, 18, 20) eine aufgespritzte Sensorschicht (16) umfasst, **dadurch gekennzeichnet, dass** der Grundkörper (12) bei der Herstellung der Sensorschicht (16) nur Temperaturen von weniger als 800 °C, bevorzugter weniger als 650 °C und am bevorzugtesten weniger als 500 °C ausgesetzt wurde und dass der Grundkörper ein Metall/Luft- oder Metall/Flüssigkeits-Wärmetauscher ist.

12. Fahrzeugheizung nach Anspruch 10, **dadurch gekennzeichnet, dass** der Grundkörper (12) durch einen Wärmetauscher oder einen Wärmetauscherbestandteil gebildet ist.

## Claims

1. Method for producing a vehicle heating (10) in which a substrate (12) of the vehicle heating (10) is equipped with a not intrinsically safe heating conductor layer (14) and a sensor device (16, 18, 20) for detecting occurrences of temperature exceeding a threshold value, wherein in order to form the sensor device (16, 18, 20) a sensor layer (16) is sprayed on, **characterized in that** during production of the sensor layer (16) the substrate (12) is exposed only to temperatures below 800°C, and **in that** the substrate (12) is a metal/air or metal/liquid heat exchanger.

2. Method according to Claim 1, **characterized in that** the sensor layer (16) and/or the heating conductor layer (14) is/are formed using a thermal spraying process.

3. Method according to Claim 1 or 2, **characterized in that** the substrate (12) is exposed only to temperatures below 650°C and most preferably below 500°C.

4. Method according to one of the preceding claims, **characterized in that** the thickness of the sensor layer (16) is in the range from 10 µm to 200 µm, more preferably 10 µm to 100 µm and most preferably 10 µm to 50 µm.

5. Method according to one of the preceding claims, **characterized in that** the sensor layer (16) is produced using a powder, wherein powder particles of the powder are in an agglomerated state or undergo agglomeration and wherein the non-agglomerated powder particles have a median grain size d50 of less than 20 µm, preferably less than 10 µm.

6. Method according to one of the preceding claims, **characterized in that** the sensor layer (16) produced using a powder has a resistance characteristic or impedance characteristic with a positive temperature coefficient.

7. Method according to one of the preceding claims, **characterized in that** the sensor layer (16) produced using a powder has a resistance characteristic or impedance characteristic with a negative temperature coefficient.

8. Method according to one of the preceding claims, **characterized in that** the sensor layer (16) is arranged on the heating conductor layer (14).

9. Method according to one of Claims 1 to 8, **characterized in that** the sensor layer (16) is arranged on that side of the heating conductor layer (14) facing away from the substrate (12).

10. Method according to one of the preceding claims, **characterized in that** the substrate (12) is entirely or partially made of aluminium.

11. Vehicle heating system (10) having a substrate (12) which bears a not intrinsically safe heating conductor layer (14) and having a sensor device (16, 18, 20), assigned to the heating conductor layer (14), which is designed to detect an occurrence of temperature exceeding a threshold value, wherein the sensor device (16, 18, 20) comprises a sensor layer (16) which is sprayed on, **characterized in that** during production of the sensor layer (16) the substrate (12) was exposed only to temperatures below 800°C, more preferably below 650°C and most preferably below 500°C, and **in that** the substrate is a metal/air or metal/liquid heat exchanger.

12. Vehicle heating system according to Claim 10, **characterized in that** the substrate (12) is formed by a heat exchanger or a heat exchanger component.

## Revendications

1. Procédé de fabrication d'un chauffage de véhicule (10), dans lequel un corps de base (12) du chauffage de véhicule (10) est équipé d'une couche de conducteur de chauffage sans sécurité intrinsèque (14) et d'un dispositif de détecteur (16, 18, 20) pour la détection de dépassements de valeurs de seuil de température, dans lequel on pulvérise une couche de détecteur (16) pour la formation du dispositif de détecteur (16, 18, 20), **caractérisé en ce que** l'on n'expose le corps de base (12) qu'à des températures de moins de 800°C lors de la réalisation de la couche de détecteur (16), et **en ce que** le corps de base (12) est un échangeur de chaleur métal/air ou métal/liquide.

2. Procédé selon la revendication 1, **caractérisé en ce que** l'on forme la couche de détecteur (16) et/ou la couche de conducteur de chauffage (14) à l'aide d'un procédé de pulvérisation à chaud.

3. Procédé selon la revendication 1 ou 2, **caractérisé en ce que** l'on n'expose le corps de base (12) qu'à des températures de moins de 650°C et de toute préférence de moins de 500°C.

4. Procédé selon l'une quelconque des revendications précédentes, **caractérisé en ce que** la couche de détecteur (16) présente une épaisseur de couche comprise dans la plage de 10 µm à 200 µm, de préférence de 10 µm à 100 µm, et de préférence encore de 10 µm à 50 µm.

5. Procédé selon l'une quelconque des revendications précédentes, **caractérisé en ce que** l'on réalise la couche de détecteur (16) à l'aide d'une poudre, dans lequel des particules de poudre de la poudre se trouvent sous forme agglomérée ou sont mises sous forme agglomérée et dans lequel les particules de poudre non agglomérées présentent une taille de grain moyenne d50 de moins de 20 µm, de préférence de moins de 10 µm.

6. Procédé selon l'une quelconque des revendications précédentes, **caractérisé en ce que** la couche de détecteur (16) réalisée à l'aide d'une poudre présente une caractéristique de résistance ou d'impédance avec un coefficient de température positif.

7. Procédé selon l'une quelconque des revendications précédentes, **caractérisé en ce que** la couche de détecteur (16) réalisée à l'aide d'une poudre présente une caractéristique de résistance ou d'impédance avec un coefficient de température négatif.

8. Procédé selon l'une quelconque des revendications précédentes, **caractérisé en ce que** la couche de détecteur (16) est disposée sur la couche de conducteur de chauffage (14).

9. Procédé selon l'une quelconque des revendications 1 à 8, **caractérisé en ce que** la couche de détecteur (16) est disposée sur le côté de la couche de conducteur de chauffage (14) détourné du corps de base (12).

10. Procédé selon l'une quelconque des revendications précédentes, **caractérisé en ce que** le corps de base (12) est constitué entièrement ou partiellement d'aluminium.

11. Chauffage de véhicule (10) avec un corps de base (12), qui porte une couche de conducteur de chauffage (14) sans sécurité intrinsèque, et avec un dispositif de détecteur (16, 18, 20) associé à la couche de conducteur de chauffage (14), qui est prévu pour détecter un dépassement d'une valeur de seuil de température, dans lequel le dispositif de détecteur (16, 18, 20) comprend une couche de détecteur (16) pulvérisée, **caractérisé en ce que** le corps de base (12) n'a été exposé, lors de la réalisation de la couche de détecteur (16), qu'à des températures de moins de 800°C, de préférence de moins de 650°C et de préférence encore de moins de 500°C, et **en ce que** le corps de base (12) est un échangeur de chaleur métal/air ou métal/liquide.

12. Chauffage de véhicule selon la revendication 10, **caractérisé en ce que** le corps de base (12) est formé par un échangeur de chaleur ou un composant d'échangeur de chaleur.
